# EUROPEAN PATENT SPECIFICATION

(11) **EP 4 366 493 B1**
(45) Date of publication and mention of the grant of the patent: **08.07.2026**
(21) Application number: 22737482.4
(22) Date of filing: 30.06.2022
(51) Int. Cl.: A01B 61/04, A01C 7/20

(54) **A SUSPENSION DEVICE IN AGRICULTURAL IMPLEMENTS, AN AGRICULTURAL IMPLEMENT WITH, AND A METHOD FOR THE USE OF, SUCH A SUSPENSION DEVICE**
AUFHÄNGUNGSVORRICHTUNG FÜR LANDWIRTSCHAFTLICHE GERÄTE, LANDWIRTSCHAFTLICHES GERÄT MIT EINER SOLCHEN AUFHÄNGUNGSVORRICHTUNG UND VERFAHREN ZUR VERWENDUNG EINER SOLCHEN AUFHÄNGUNGSVORRICHTUNG
DISPOSITIF DE SUSPENSION DANS DES OUTILS AGRICOLES, OUTIL AGRICOLE COMPRENANT CELUI-CI, ET PROCÉDÉ POUR L'UTILISATION D'UN TEL DISPOSITIF DE SUSPENSION

(30) Priority: 05.07.2021 SE 2150879
(43) Date of publication of application: 15.05.2024
(73) Proprietor: Väderstad Holding AB, 595 21 Mjölby (SE)
(72) Inventor: ANDERSSON, Erik, 596 34 Skänninge (SE)
(74) Representative: AWA Sweden AB
(86) International application number: PCT/EP2022/068127
(87) International publication number: WO 2023/280680

(56) References cited:
- WO-A1-2010/144025
- DE-A1- 4 202 771
- US-A- 3 687 479

## Description

### Technical Field

This document relates to a suspension device for agricultural implements and to an agricultural implement with such a suspension device.

### Background

GB652266A and EP1541003B1 show suspension devices of a type which is used in agricultural implements, and which comprise an inner square tube which is arranged in an outer casing, the square tube and the casing being rotated 45° in relation to each other and rubber rods are arranged in the substantially triangular spaces formed between the outer surface of the square tube and the inner surface of the casing.

SE534357C2 shows a similar suspension device, which substantially consists of a triangular tube and a casing with a triangular cross section, which are rotated 60° relative to each other and are provided with rubber rods in the triangular spaces formed.

DE4202771 A1 and US3687479 A show suspension devices with a triangular tube having curved sides.

The suspension devices of the type above are normally positioned so that the square tube or the triangular tube extends substantially horizontally and perpendicular to a direction of travel of the agricultural implement, so that a suspension motion is carried out in a vertical plane parallel to the direction of travel.

When the casing rotates relative to the beam, the volume for the suspension members is reduced and the suspension members must therefore be compressed and a suspension occurs. The suspension force in this type of suspension devices is exponentially higher at a relative angle between the beam and the casing, when the compressed rubber rods become very hard during compression. It can cause e.g. harrow tines or harrow discs to be damaged if the agricultural implement is subjected to an excessive rotation, for example, if a stone or similar is hit when driving.

Consequently, there is scope for improving the suspension characteristics of suspension devices for agricultural implements.

### Summary

One object of the inventive concept is thus to provide a suspension device for agricultural implements with improved suspension characteristics. The inventor has identified that it would be desirable to provide suspension devices which have a longer linear increase of the suspension force relative to rotation, and has provided this by developing a suspension device which has a beam with a polygon-shaped cross section, where each side has two straight opposite sides angled relative to each other.

The invention is defined by the accompanying independent claims. Embodiments are set forth in the accompanying dependent patent claims, in the description that follows and in the drawings.

According to a first aspect, a suspension device for agricultural implements is provided, comprising: a casing, a beam extending through the casing, and a plurality of suspension members arranged in a space between the casing and the beam, the casing and the beam being resiliently pivotable relative to each other about an axis of rotation along the longitudinal direction of said beam, said beam having a cross section viewed in a plane perpendicular to the longitudinal direction of a polygon with a plurality of corners, wherein each side between two adjacent corners of said polygon has a first straight side surface and a second straight side surface forming an angle to the first straight side surface which is greater than 0°, wherein said polygon is a triangle, and thus the beam has three first side surfaces and three second side surfaces, wherein the casing has an inside, which, when viewed in a cross section in a plane perpendicular to the longitudinal direction, has a straight inner side substantially parallel to one of said second straight side surfaces of the beam when the casing and the beam are rotated to a loaded position relative to each other, wherein one of said suspension members is arranged to be compressed between said straight inner side of the casing and the substantially parallel second straight side surface of the beam when the casing and the beam are rotated to a loaded position relative to each other, and wherein said angle between the first straight side surface and the second straight side surface creates an increase in volume between said second straight side surface and the casing during rotation of the beam relative to the casing.

By providing a suspension device for agricultural implements which has a beam with the above-mentioned cross section, a suspension characteristic with a longer linear increase of the suspension force relative to rotation is obtained than a beam with only straight sides between the edges of the cross section of the polygon. The two straight surfaces enable the suspension member to be compressed against a straight inner surface both in an unloaded and in a loaded position even though the beam is rotating relative to the casing.

"Side surface" means the main surfaces of the beam, with the exception of what can be considered to be the transition portions at, for example, the corners of the beam. A first side surface and a second side surface can be two different portions formed from the same material, or can be a number of composite parts to form a beam.

Here "axis of rotation" means an approximate axis about which rotation can occur. It will be appreciated that the axis of rotation can be displaced somewhat, depending on the magnitude of the loads and the direction, as well as the variation in compression of the suspension members.

Here "polygon" means a shape which has a plurality of corners. The corners can have some curvature without deviating from being a polygon in the sense of the application. Although a polygon can comprise, for example, triangles, squares, pentagrams, hexagrams etc., the polygon in the application will focus on polygons with three and four edges.

A "straight side surface" means that the surface is substantially straight in a cross section viewed in a plane perpendicular to the longitudinal direction. A surface having a very small curvature, for example a curvature with a radius of 10 or 100 times greater than the distance to the centre of the beam, is considered to be straight in this sense. An example of what a straight surface comprises is that the surface deflects at most 3 mm on a length of 100 mm, or 2 mm on a length of 70 mm. If the side surfaces have such a negligible curvature, the angles given below between the two straight side surfaces should be measured between two lines drawn straight from the outer edges of each straight side surface, respectively.

"Suspension member" means any resilient member which is elongate, and which can take up the forces between the beam and the casing. Generally, elongate, substantially cylinder-shaped, rubber members are used which provide their resilience through the compression characteristics of the material.

Since the beam has three sides and it may interact with three suspension members. Furthermore, the geometry of a triangular shape allows a large relative rotation between the beam and the casing, up to 60 degrees rotation, before the space between the beam and the suspension member becomes too small for any further rotation.

The straight inner side of the casing inside, substantially parallel to one of said second straight surfaces when the casing and the beam are rotated to a loaded position relative to each other, enables the suspension members to be compressed between two substantially parallel surfaces, which enables a force to be as linear as possible during the rotation of the beam relative to the casing. In some embodiments, the casing also has a second substantially straight surface, which is substantially parallel to said second straight side surface of the beam when the casing and the beam are rotated to an unloaded position relative to each other.

The suspension members arranged to be compressed between said straight inner side of the casing and the substantially parallel second straight side surface of the beam when the casing and the beam are rotated to a loaded position relative to each other enables that the compression of the suspension members can occur substantially homogeneously on the whole suspension member, instead of a smaller portion of the suspension member being subjected to significantly more compression than other portions of the suspension member.

According to one embodiment, said angle is formed between a first axis running through said first straight side and a second axis running through said second straight side. The angle is a supplementary angle to an angle formed in the intersection between said first straight side and said second straight side and seen from the inside of the beam.

According to one embodiment, said suspension device comprises at least the same number of suspension members as the number of corners of the polygon. In one embodiment the polygon is a triangle and the suspension device comprise three suspension members. In alternative embodiments there may be more suspension members than the number of corners in the polygon. It is e.g. possible to have several suspension member interacting with each corner of the polygon. Such suspension members may be distributed along the longitudinal directions. In a preferred embodiment there is only one suspension member per corner for each plane perpendicular to the longitudinal direction. According to one embodiment, each of said plurality of corners of said polygon is rounded with a radially outward convex outside.

In this way, the outer dimensions of the beam can be greater, with maintained dimensions of the casing, since the rotation of the beam requires less space when the corners are rounded. Furthermore, enabling rounded corners means that the suspension members do not risk being damaged from pointed corners.

According to one embodiment, the angle between the first straight side surface and the second straight side surface is between 15° and 32°, preferably between 18° and 29°.

In this way, the beam can have two different angles on the surfaces which can compress the suspension members with a straight surface relative to the casing even though the casing is rotated relative to the beam.

According to one embodiment, the first straight side surface and the second straight side surface together form at least a third of the whole length of the side, and preferably together they form at least half the length of the side.

In this way, the beam can have two relatively large surfaces which can exert a pressure on the suspension member, which enables the suspension member to be compressed with a more even pressure and with a more homogeneous force.

According to one embodiment, said polygon has three corners with an inner angle which is between 40° and 65°, preferably between 45° and 60°. In this way, it is easy to differentiate between what is considered to be a corner in a triangle and what is only curved parts between, for example, two flat side surfaces.

According to one embodiment, said polygon has four corners with an inner angle which is between 95° and 135°, preferably between 110° and 120°. In this way, it is easy to differentiate between what is considered to be a corner in a square and what is only curved parts between, for example, two flat side surfaces.

According to one embodiment, each side between the corners of said polygon has a connecting curved portion between the first straight surface and the second straight surface.

In this way, the two straight side surfaces can be arranged in an angle to each other, at the same time as a suspension member can roll, be pushed or glide between the two surfaces without any considerable wear.

According to one embodiment, the first straight surface has an extension along an axis projecting inwardly into the cross section in a direction toward a first corner.

In this way, the first straight surface toward said first corner can be finished with a portion turning outwardly toward the corner again, which provides a distinct home position during the rotation to an unloaded position.

According to one embodiment, the second straight surface has an extension along an axis projecting toward a second corner in the polygon located in the other end of the side surface relative to said first corner. In this way, the second straight surface can have an extension substantially the whole way till the corner portion begins, which enables a substantially linear increase of the suspension force as long as possible relative to the rotation in the loaded position.

According to one embodiment, the first straight side surface is connected to an adjacent radially outward convex corner via a radially outward concave portion.

In this way, the first straight surface toward said first corner can be finished with a radially outward concave portion turning outwardly to the corner again, which provides a distinct home position during the rotation to an unloaded position when the suspension members are compressed very quickly relative to the rotation in such a portion.

According to one embodiment, the first straight side surface forms an idle position portion and the second straight side surface forms a load portion.

In this way, the first side surface can be the portion of the beam which is in contact with a suspension member in the idle position and the second side surface can form the portion of the beam which primarily is in contact with the suspension member in a loaded position.

According to one embodiment, a volume between said idle position portion and an interacting portion of the outer casing defines a first volume which houses a suspension member in an idle position, and a volume between said load portion and an interacting portion of the outer casing defines a second smaller volume which houses a suspension member in a loaded position.

In this way, the load on the suspension member can be higher in the loaded position than in the idle position.

According to one embodiment, said polygon is a rectangle, such as a square, and thus the beam has four first side surfaces and four second side surfaces.

Accordingly, the beam has four sides and can interact with four suspension members and can thus distribute the force across four suspension members. However, the geometry of a square profile allows a somewhat smaller rotation, approximately 30 degrees rotation, before the space between the beam and the suspension member becomes too small for any further rotation due to the rigidity of the suspension member.

According to one embodiment, the inside of the outer casing has recesses for housing the suspension members in a loaded position to reduce the suspension force.

By having a recess, which provides a radial space from the centre axis of the beam, it is possible to create a volume between the inside of the outer casing and the beam which reduces the suspension force. By positioning the recess between the unloaded and the loaded end position, it is possible to create a suspension characteristic which becomes more linear than shown earlier.

In one embodiment, the recess is formed by the material thickness of the casing being thinner at the recesses. In other embodiments that can be combined, the casing can bulge radially outward from the centre axis of said beam to create the recess.

According to one embodiment, the suspension members have at least one ridge and/or at least one recess, and wherein the inside of the casing has at least one interacting recess and/or at least one interacting ridge.

By having interacting ridges and recesses, the suspension members can be kept in position relative to the casing, in the longitudinal direction L, in order to avoid the suspension members crawling along the longitudinal direction of the beam and the casing.

According to a second aspect, use of a suspension device according to the description above in an agricultural implement is provided, but also the agricultural implement itself comprising a suspension device according to any embodiment described herein.

The suspension device can be used to cushion a ground-engaging part, wherein the ground-engaging part is selected from a group consisting of a harrow disc, a seed disc, a disc opener, a levelling tool, a strip-till-tine, a fertilizer disc, a wheel, a wheel carrier, a packer roller, a tine opener, and a harrow tine.

According to a third aspect a method of suspending an agricultural implement using a suspension device is provided, wherein the suspension device comprises a casing, a beam extending through the casing, and a plurality of suspension members arranged in a space between the casing and the beam, wherein said beam having a cross section viewed in a plane perpendicular to the longitudinal direction of a polygon with a plurality of corners, wherein each side between two adjacent corners of said polygon has a first straight side surface and a second straight side surface forming an angle to the first straight side surface which is greater than 0°, wherein said polygon is a triangle, and thus the beam has three first side surfaces and three second side surfaces, and wherein said angle between the first straight side surface and the second straight side surface creates an increase in volume between said second straight side surface and the casing during rotation of the beam relative to the casing, wherein the method comprises: compressing one of said suspension members between a first straight side surface and an inner surface of said casing in an idle position, moving the suspension members from the first straight side surface to a second straight side surface via a curved connection surface by rotating the casing relative to the beam about an axis of rotation along the longitudinal direction of said beam from an idle position to a loaded position, and compressing said suspension member between said second straight side surface and an inner surface of said casing in said loaded position.

In this way, the suspension of an agricultural implement can be improved by a suspension characteristic which is linear relative to the rotation in a longer part than in the prior art.

According to one embodiment, the method further comprises housing a suspension member in a recess in the inside of said outer casing in order to reduce the suspension force when in a loaded position.

In this way, it is possible to reduce the load on the suspension members in the loaded position in order to reduce the risk of damage to the implements.

### Brief description of the drawings

Fig. 1a is a perspective view of an agricultural implement in the form of a seed drill.
Fig. 1b is a side view of the agricultural implement in Fig. 1.
Fig. 1c is a detail view of the suspension device in Figs 1a and 1b.
Fig. 2a is a schematic sectional view of the suspension device.
Fig. 2b is a top view of the suspension device somewhat separated.
Figs 3a-3d are side views and perspective views of the beam in two variants, respectively.
Figs 4a and 4b are side views of a suspension device in different cases of load.
Figs 5a-5b show a variant of the beam.
Figs 6a-6b show an additional variant of the beam.
Fig. 7 shows a cross-sectional view of the casing.
Fig. 8 shows the casing and three suspension members.
Fig. 9 is a graph showing the suspension force as a function of the suspension angle for suspension devices according to the prior art and a suspension device according to one embodiment.
Fig. 10 is a flow chart of the method of suspending an agricultural implement according to one embodiment.

### Description of embodiments

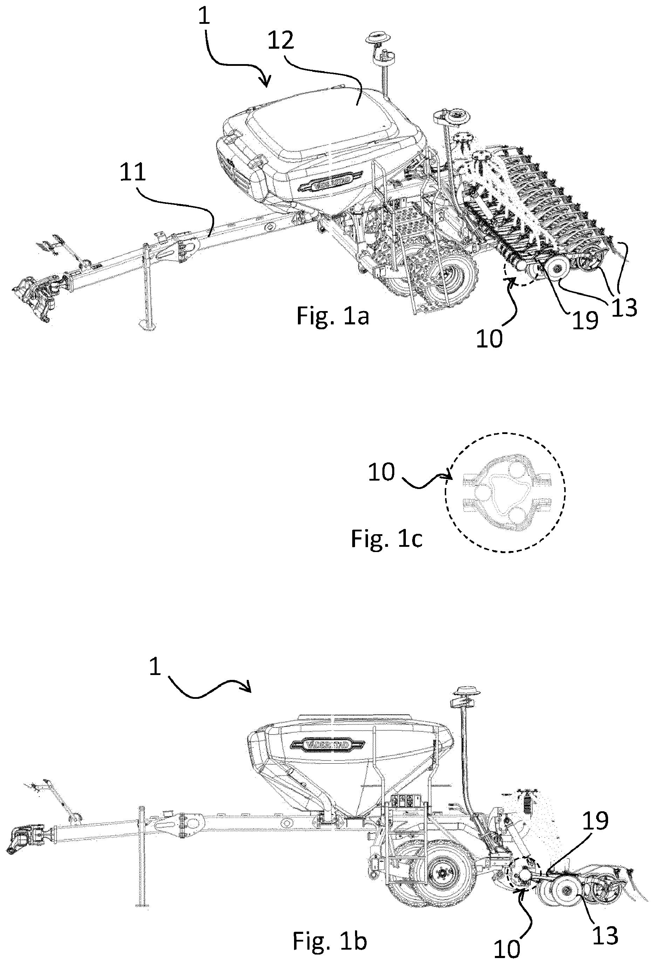

Fig. 1a is a perspective view of an agricultural implement in the form of a seed drill and Fig. 1b shows the same seed drill but in a side view. The seed drill has a frame 11, a seed box 12 and a plurality of soil-working tools 13, here in the form of harrow tines, seed discs and packer wheels.

The frame 11 can comprise a longitudinal beam and (at least) a transverse beam with a suspension device 10, on which the tools 13 can be suspended. In the example shown, the harrow tines comprise a part which is made of spring steel, and thus produces resilience in the harrow tines. The seed discs and packer wheels 13 are, however, suspended on rigid arms 19, so here the suspension device 10 forms the complete suspension between the beam frame 11 and the arm 19.

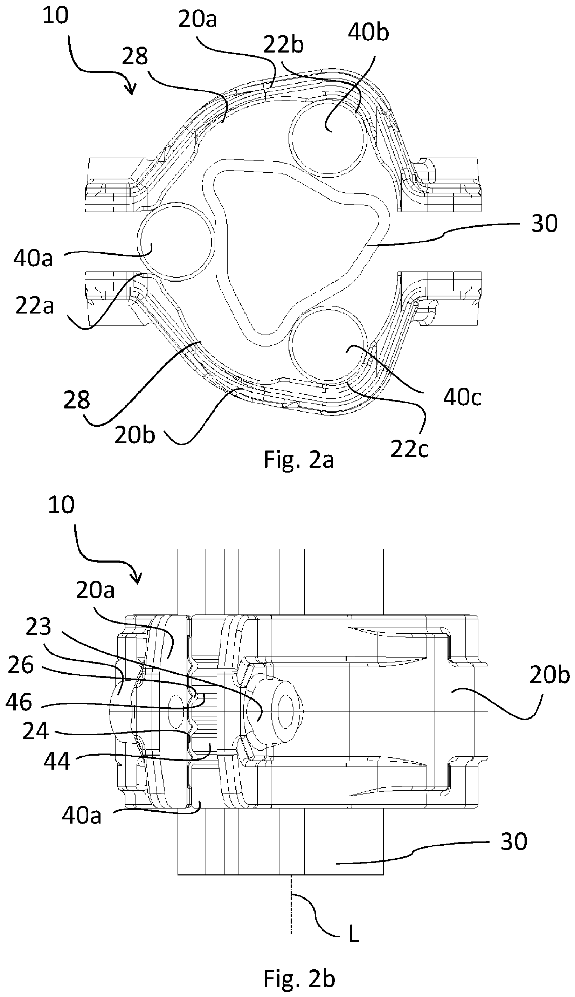

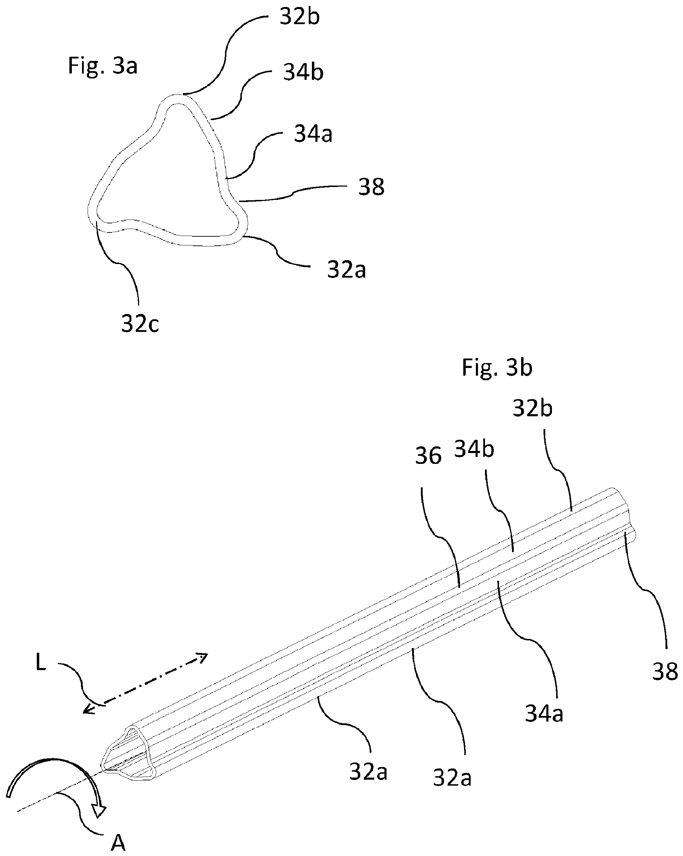

Figure 1c shows an enlarged illustration, in cross section, of an embodiment of the suspension device 10 forming part of the innovative concept in this document. The same figure, but enlarged, is illustrated in Figure 2a which will be described henceforth. The suspension device comprises a casing 20, which in this example is a casing 20a, 20b in two parts which can be joined together using fastening means. In the illustrated example, screw and bolt joints are used, which engage with flanges 23 of the casing, as can be seen most clearly in the top view in Figure 2b. Furthermore, the suspension device has an elongate beam 30, which will be described in more detail in relation to Figures 3a-3d. The beam has a principally polygon-shaped cross section, viewed in a plane perpendicular to the longitudinal direction L. The polygon can have a plurality of corners, for example 3-7 corners 32a, 32b, 32c, 32d. In the application, embodiments with three or four corners are described. Although there are advantages with having only three or four corners (for example, providing longer freedom of rotation), the concept of the invention is not limited by beams with a cross section with three or four corners.

In the illustrated example, there are three longitudinal suspension members 40a, 40b, 40c between the casing 20 and the beam 30. The suspension members 40a, 40b, 40c can be in the form of a body which is formed by a rubber or rubberlike material and can have a substantially cylindrical shape. Rubberlike materials means materials which have rubberlike characteristics, i.e. are flexible, resilient and have hysteresis. An alternative material is a thermoplastic material. For example, the suspension members can be formed as an injection-moulded or an extruded profile. The suspension members can be substantially identical, but they can also have different sizes, shapes or be of different materials. The suspension members interact with rounded side surfaces 22a, 22b, 22c of the casing.

Furthermore, the suspension members can have ridges 44 and recesses 46 which create a pattern around the circumference of the suspension beam. These ridges 44 and recesses 46 can have corresponding recesses 24 and ridges 26 in the inside of the casing. The interacting ridges and recesses keep the suspension members in position relative to the casing, in the longitudinal direction L, in order to avoid the suspension members crawling along the longitudinal direction of the beam and the casing.

Furthermore, in this illustration, the inside of the outer casing has recesses 28 for housing the suspension members in a loaded position to reduce the suspension force. The recesses can be formed by the material thickness of the casing being adapted, or by having a bulge on the outside where more space on the inside is desired. The recess can also be formed by having an insert on other surfaces on the inside of the casing, thus providing a relative recess. The objective is to create a volume which is somewhat greater between the beam and the casing during the rotation which corresponds to a loaded position.

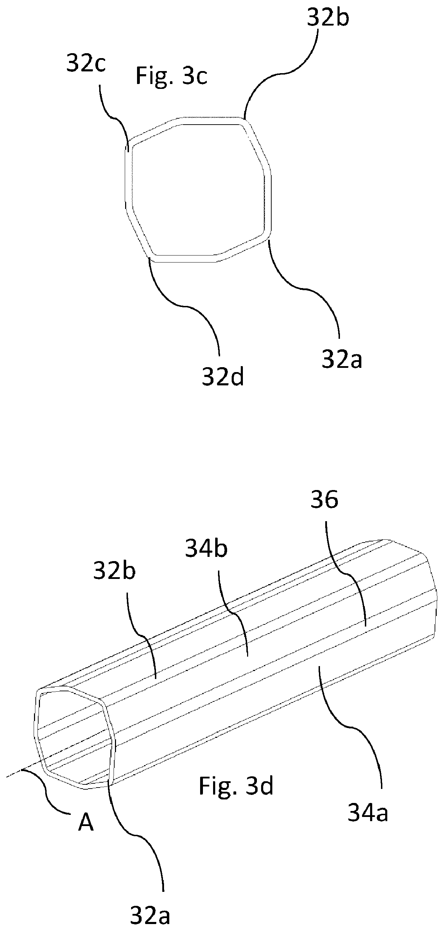

Figs 3a-3d are side views and perspective views of the beam in two variants, respectively; namely, where the polygon is a triangle in Figures 3a and 3b, and where the polygon is a rectangle, more specifically a square, in Figures 3c and 3d.

"Triangle" or "square" in the application means that the shape has three or four real corners, respectively. Although the shapes can also have curvatures of their sides, the shapes in this application are called triangle or rectangle/square, respectively.

Figures 3a and 3b illustrate a beam with three corners 32a, 32b, 32c. Figures 3c and 3d illustrate a beam with four corners 32a, 32b, 32c and 32d. Both beams have a longitudinal extension in the longitudinal direction L, about which the casing can rotate about the axis of rotation A. The axis of rotation can move somewhat depending on, for example, loads and how much each suspension member is compressed.

Each side of the beam between two adjacent corners has a first straight side surface 34a and a second straight side surface 34b. As mentioned above, the surfaces can have a very small curvature and still be considered to be straight. A small curvature is considered to be a curvature with a radius which is 10 times or 100 times greater than the distance to the centre of the beam.

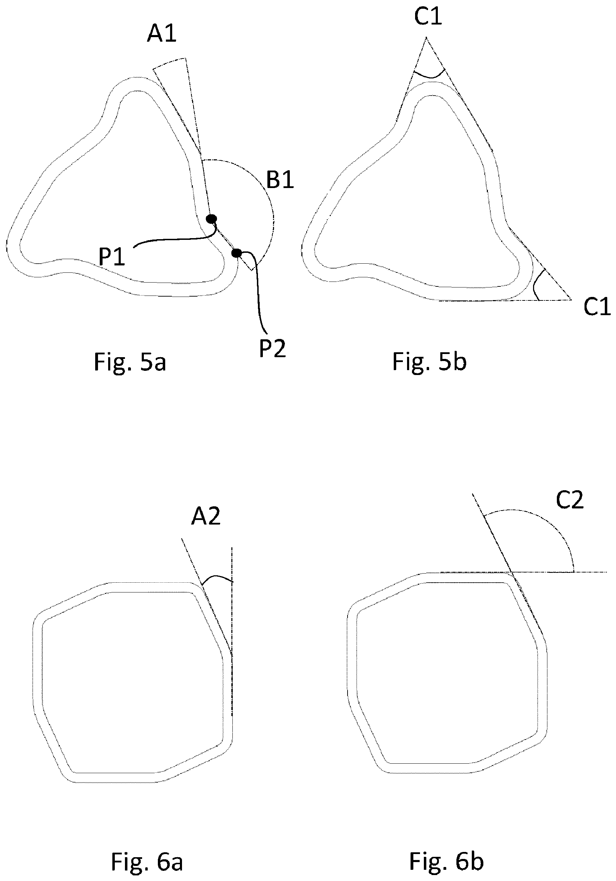

The two straight side surfaces 34a and 34b are angled to each other, which is clearly illustrated in Figures 5a, 5b, 6a and 6b. The first straight side surface 34a is connected to the second straight side surface 34b via a connecting curved portion 36. The curvature of the curved portion 36 forms the angle between both straight portions.

Figure 3a also illustrates that the first straight side surface 34a is connected to an adjacent radially outward convex corner 32a via a radially outward concave portion 38. The radially outward concave portion 38 forms a stop position or a home position for the suspension device, where the suspension member can land during rotation toward an unloaded position. It provides a distinct home position for the suspension which makes it easier for the user of the agricultural implement.

Even though the outwardly concave portion 38 is not illustrated in connection with the square profile in Figures 3c and 3d, it is fully compatible with having a corresponding concave portion in a square profile.

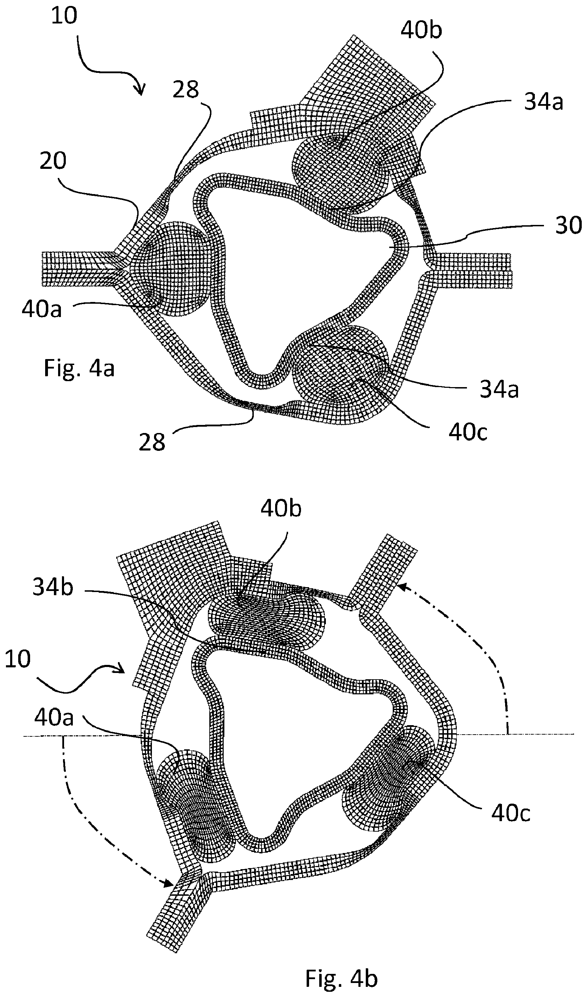

Figs 4a and 4b are illustrations of the load in a suspension device in different cases of load. When the casing rotates relative to the beam, the volume for the suspension members is reduced and the suspension members must therefore be compressed and a suspension occurs. Figure 4a shows when the suspension device is assembled and in an unloaded position. Grids on the suspension members illustrate that certain portions of the suspension members are more compressed than others, by the grid having smaller squares where this is the case. The suspension members 40a, 40b, 40c are only somewhat compressed and are in contact with the first straight side surfaces 34a. In Figure 4b, the casing has rotated approximately 60 degrees, and the suspension members have rolled along the sides of the beam over to the second straight side surface 34b on each side. A part of the suspension members has rolled past the recesses 28 in the casing and is close to its maximum loaded position, when the volume available between the casing and the beam reduces with the rotation. The recesses 28 can be positioned in the casing to counteract the rapid reduction of the volume during rotation of the beam relative to the casing, preferably in the second half of the rotational movement but not in the last tenth of the rotational movement.

Figs 5a-5b illustrate the side angle A1, A2 between the first side surface and the second side surface. The side angle A1 in the illustrated example is 27°. It is the angle between the first straight side surface and the second straight side surface which creates an increase in volume relative to a straight side during the rotation of the beam relative to the casing. Figure 6a shows the corresponding side angle A2 in a polygon with four corners where the angle between the side is 25 degrees. An interval on the side angle A1, A2 which creates an advantageous space during rotation can be in the interval between 15° and 33°, and is preferably between 18° and 30°.

Figure 5a further illustrates the angle between the first side surface and a line from a point P1 at the start on the first side surface (toward the first corner) to a second point P2 where the corner begins. This angle corresponds to the main angle on the second surface relative to the concave portion which creates the home position at the unloaded position.

Furthermore, Figures 5b and 6b show the inner angle of the corners of a triangular beam and of a square beam. These corner angles C1 are 53° in the triangular beam and the corner angles C2 in the square beam are 115°. A good interval for a polygon with four corners is an inner angle which is between 95° and 135°, preferably between 110° and 120°. In the case of a polygon with three corners, a good interval for the inner angle is between 40° and 65°, preferably between 45° and 60°.

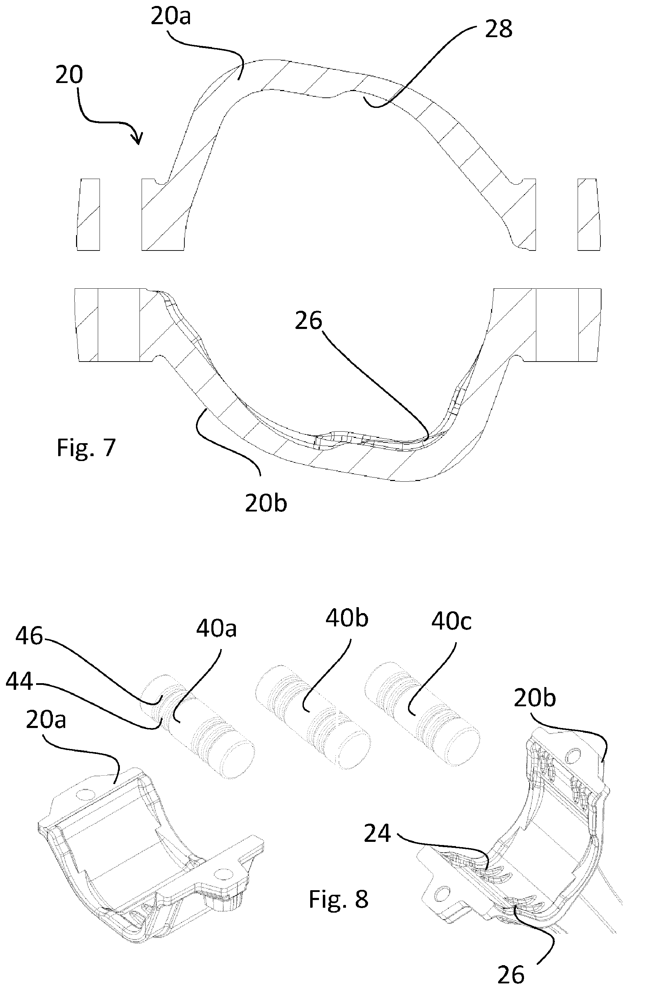

Figure 7 shows a cross-sectional view of the casing and Figure 8 shows the casing and three suspension members in perspective and shown as unassembled loose parts. In these views, the recesses 28 in the casing for housing the suspension members in the loaded position are also visible, as well as the ridges and recesses 44 and 46 which are to interact with the recesses 24 and the ridges 26 in the casing, which ridges and recesses are formed to keep the suspension members in position in the longitudinal direction L.

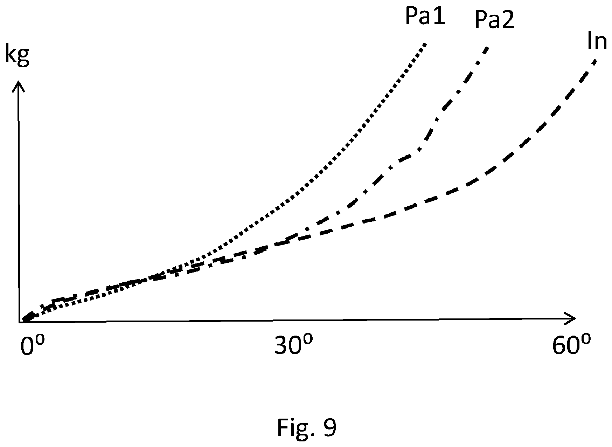

Fig. 9 is a graph showing the suspension force as a function of the suspension angle for suspension devices according to the prior art and a suspension device according to the invention. The curve Pa1 corresponds to a square beam of 70x70 mm in a casing with four rubber springs between the beam and the casing. The intermediate curve Pa2 shows the opener pressure in kilograms for a triangularly formed beam. The last curve In shows the opener pressure in kilograms for a suspension device in accordance with the one illustrated in Figure 2a. This graph illustrates that the two angled side surfaces provide a longer linear pressure ratio relative to the rotation. This causes the opener pressure to be lower for rotations up to 60°. In the illustrated example, the opener pressure is approximately 115 kg at 30° rotation and approximately 200 kg at 50 degrees rotation. It is only after approximately 50° rotation that the new suspension is no longer linear. A square beam can not reach 60° rotation. A square beam with four corners will after 45 degrees rotation position the rubber spring at a starting position but relative the next corner. Thus, with a suspension beam having a triangular shape, e.g. as shown in figure 2a, an improved damping characteristics may be achieved for higher degrees of rotation.

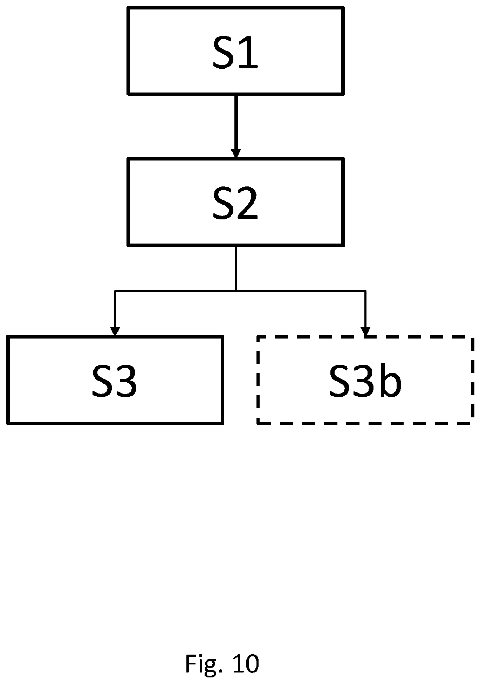

Finally, Fig. 10 shows a flow chart of the method of suspending an agricultural implement according to one embodiment. The method comprises three main steps, namely compressing S1 one of the suspension members between a first straight side surface and an inner surface of the casing in an idle position. This corresponds to what is shown in Figure 4a. Then the second step occurs, namely moving S2 the suspension members from the first straight side surface to a second straight side surface via a curved connection surface by rotating the casing relative to the beam about an axis of rotation A along the longitudinal direction L of the beam from an idle position to a loaded position. The loaded position is the position illustrated in Figure 4b. The final step is compressing S3 the suspension member between the second straight side surface and an inner surface of the casing in the loaded position. Furthermore, the flow chart illustrates the optional step of housing S3b a suspension member in a recess in the inside of the outer casing in order to reduce the suspension force when in a loaded position. This is made possible by obtaining a greater volume to house the suspension member using the recess.

Furthermore, those skilled in the art will understand that all moments described in connection with the suspension device or the agricultural implement will also provide support for descriptions of optional method steps which have corresponding advantages as discussed in relation to the product.

## Claims

1. Suspension device (10) for a ground-engaging part of an agricultural implements (1) comprising:
a casing (20),
a beam (30) extending through the casing, and
a plurality of suspension members (40a, 40b, 40c) arranged in a space between the casing and the beam,
the casing and the beam being resiliently pivotable relative to each other about an axis of rotation (A) along the longitudinal direction (L) of said beam,
said beam (30) having a cross section viewed in a plane perpendicular to the longitudinal direction (L) of a polygon with a plurality of corners (32a, 32b, 32c),
each side between two adjacent corners of said polygon has a first straight side surface (34a) and a second straight side surface (34b) forming an angle (A1) to the first straight side surface which is greater than 0°,
wherein said polygon is a triangle, and thus the beam (30) has three first side surfaces and three second side surfaces,
wherein the casing has an inside, which, when viewed in a cross section in a plane perpendicular to the longitudinal direction (L), has a straight inner side substantially parallel to one of said second straight side surfaces when the casing and the beam are rotated to a loaded position relative to each other,
**characterized in that**
one of said suspension members is arranged to be compressed between said straight inner side of the casing and the substantially parallel second straight side surface of the beam when the casing and the beam are rotated to a loaded position relative to each other, and
wherein said angle (A1) between the first straight side surface (34a) and the second straight side surface (34b) creates an increase in volume between said second straight side surface (34b) and the casing (20) during rotation of the beam relative to the casing.

2. Suspension device (10) for agricultural implements according to any one of the preceding claims, wherein each of said plurality of corners of said triangle is rounded with a radially outward convex outside.

3. Suspension device (10) for agricultural implements according to any one of the preceding claims, wherein the angle (A1) between the first straight side surface and the second straight side surface is between 15° and 32°, preferably between 18° and 29°.

4. Suspension device (10) for agricultural implements according to any one of the preceding claims, wherein the first straight side surface and the second straight side surface together form at least a third of the whole length of the side, and preferably together they form at least half the length of the side.

5. Suspension device (10) for agricultural implements according to any one of the preceding claims, wherein said triangle has three corners with an inner angle which is between 40° and 65°, preferably between 45° and 60°.

6. Suspension device (10) for agricultural implements according to any one of the preceding claims, wherein each side between the corners of said triangle has a connecting curved portion (36) between the first straight surface and the second straight surface.

7. Suspension device (10) for agricultural implements according to any one of the preceding claims, wherein the first straight side surface has an extension along an axis projecting inwardly into the cross section in a direction toward a first corner.

8. Suspension device (10) for agricultural implements according to Claim 7, wherein the second straight side surface has an extension along an axis projecting toward a second corner in the triangle located in the other end of the side surface relative to said first corner.

9. Suspension device (10) for agricultural implements according to any one of the preceding claims, wherein the first straight side surface is connected to an adjacent radially outward convex corner via a radially outward concave portion.

10. Suspension device (10) for agricultural implements according to any one of the preceding claims, wherein the first straight side surface (34a) forms an idle position portion and the second straight side surface (34b) forms a load portion.

11. Suspension device (10) for agricultural implements according to Claim 10, wherein a volume between said idle position portion and an interacting portion of the outer casing defines a first volume which houses one of said suspension members in an idle position, and a volume between said load portion and an interacting portion of the outer casing defines a second smaller volume which houses one of said suspension members in a loaded position.

12. Suspension device (10) for agricultural implements according to any one of the preceding claims, wherein the inside of the outer casing has recesses for housing the suspension members in a loaded position to reduce the suspension force.

13. Suspension device (10) for agricultural implements according to any one of the preceding claims, wherein the suspension members have at least one ridge (44) and/or at least one recess (46), and wherein the inside of the casing has at least one interacting recess (24) and/or at least one interacting ridge (26).

14. Agricultural implement (1) comprising a suspension device according to any one of the preceding claims.

15. Method of suspending an agricultural implement using a suspension device comprising:
a casing (22, 23),
a beam (30) extending through the casing, and
a plurality of suspension members (40a, 40b, 40c) arranged in a space between the casing and the beam,
wherein said beam (30) having a cross section viewed in a plane perpendicular to the longitudinal direction (L) of a polygon with a plurality of corners (32a, 32b, 32c),
wherein each side between two adjacent corners of said polygon has a first straight side surface (34a) and a second straight side surface (34b) forming an angle (A1) to the first straight side surface which is greater than 0°,
wherein said polygon is a triangle, and thus the beam (30) has three first side surfaces and three second side surfaces, and
wherein said angle (A1) between the first straight side surface (34a) and the second straight side surface (34b) creates an increase in volume between said second straight side surface (34b) and the casing (20) during rotation of the beam relative to the casing, wherein the method comprises:
- compressing (S1) one of said suspension members between one of said first straight side surfaces (34a) and an inner surface of said casing in an idle position,
- moving (S2) the suspension members from the first straight side surface to a second straight side surface via a curved connection surface by rotating the casing relative to the beam about an axis of rotation (A) along the longitudinal direction (L) of said beam from an idle position to a loaded position, and
- compressing (S3) said suspension member between said second straight side surface and an inner surface of said casing in said loaded position.

16. Method according to Claim 15, further comprising
- housing (S3b) one of said suspension members (40a, 40b, 40c) in a recess in the inside of said outer casing in order to reduce the suspension force when in said loaded position.

## Patentansprüche

1. Aufhängungsvorrichtung (10) für einen bodeneingreifenden Teil eines landwirtschaftlichen Arbeitsgeräts (1), umfassend:
ein Gehäuse (20),
einen sich durch das Gehäuse erstreckenden Träger (30), und
eine Mehrzahl von Aufhängungselementen (40a, 40b, 40c), die in einem Raum zwischen dem Gehäuse und dem Träger angeordnet sind,
wobei das Gehäuse und der Träger relativ zueinander um eine Drehachse (A) in Längsrichtung (L) des Trägers elastisch schwenkbar sind,
wobei der Träger (30) einen Querschnitt aufweist, der bei Betrachtung in einer Ebene senkrecht zur Längsrichtung (L) ein Polygon mit einer Mehrzahl von Ecken (32a, 32b, 32c) bildet,
wobei jede Seite zwischen zwei benachbarten Ecken des Polygons eine erste gerade Seitenfläche (34a) und eine zweite gerade Seitenfläche (34b) aufweist, die mit der ersten geraden Seitenfläche einen Winkel (A1) bildet, der größer als 0° ist,
wobei das Polygon ein Dreieck ist, sodass der Träger (30) drei erste Seitenflächen und drei zweite Seitenflächen aufweist,
wobei das Gehäuse eine Innenseite aufweist, die bei Betrachtung in einem Querschnitt in einer Ebene senkrecht zur Längsrichtung (L) eine gerade Innenseite aufweist, die im Wesentlichen parallel zu einer der zweiten geraden Seitenflächen ist, wenn das Gehäuse und der Träger relativ zueinander in eine Lastposition gedreht sind,
**dadurch gekennzeichnet, dass**
eines der Aufhängungselemente so angeordnet ist, dass es zwischen der geraden Innenseite des Gehäuses und der im Wesentlichen parallelen zweiten geraden Seitenfläche des Trägers komprimiert wird, wenn das Gehäuse und der Träger relativ zueinander in die Lastposition gedreht sind, und
wobei der Winkel (A1) zwischen der ersten geraden Seitenfläche (34a) und der zweiten geraden Seitenfläche (34b) während der Drehung des Trägers relativ zum Gehäuse eine Volumenzunahme zwischen der zweiten geraden Seitenfläche (34b) und dem Gehäuse (20) erzeugt.

2. Aufhängungsvorrichtung (10) für landwirtschaftliche Arbeitsgeräte nach einem der vorhergehenden Ansprüche, wobei jede der Mehrzahl von Ecken des Dreiecks mit einer radial nach außen gewölbten Außenseite abgerundet ist.

3. Aufhängungsvorrichtung (10) für landwirtschaftliche Arbeitsgeräte nach einem der vorhergehenden Ansprüche, wobei der Winkel (A1) zwischen der ersten geraden Seitenfläche und der zweiten geraden Seitenfläche zwischen 15° und 32°, vorzugsweise zwischen 18° und 29° beträgt.

4. Aufhängungsvorrichtung (10) für landwirtschaftliche Arbeitsgeräte nach einem der vorhergehenden Ansprüche, wobei die erste gerade Seitenfläche und die zweite gerade Seitenfläche zusammen mindestens ein Drittel der Gesamtlänge der Seite bilden und vorzugsweise zusammen mindestens die Hälfte der Länge der Seite bilden.

5. Aufhängungsvorrichtung (10) für landwirtschaftliche Arbeitsgeräte nach einem der vorhergehenden Ansprüche, wobei das Dreieck drei Ecken mit einem Innenwinkel aufweist, der zwischen 40° und 65°, vorzugsweise zwischen 45° und 60° beträgt.

6. Aufhängungsvorrichtung (10) für landwirtschaftliche Arbeitsgeräte nach einem der vorhergehenden Ansprüche, wobei jede Seite zwischen den Ecken des Dreiecks einen verbindenden gekrümmten Abschnitt (36) zwischen der ersten geraden Seitenfläche und der zweiten geraden Seitenfläche aufweist.

7. Aufhängungsvorrichtung (10) für landwirtschaftliche Arbeitsgeräte nach einem der vorhergehenden Ansprüche, wobei die erste gerade Seitenfläche eine Verlängerung entlang einer Achse aufweist, die sich nach innen in den Querschnitt in Richtung auf eine erste Ecke erstreckt.

8. Aufhängungsvorrichtung (10) für landwirtschaftliche Arbeitsgeräte nach Anspruch 7, wobei die zweite gerade Seitenfläche eine Verlängerung entlang einer Achse aufweist, die auf eine zweite Ecke des Dreiecks gerichtet ist, die sich an dem anderen Ende der Seitenfläche relativ zu der ersten Ecke befindet.

9. Aufhängungsvorrichtung (10) für landwirtschaftliche Arbeitsgeräte nach einem der vorhergehenden Ansprüche, wobei die erste gerade Seitenfläche über einen radial nach außen konkaven Abschnitt mit einer benachbarten radial nach außen konvexen Ecke verbunden ist.

10. Aufhängungsvorrichtung (10) für landwirtschaftliche Arbeitsgeräte nach einem der vorhergehenden Ansprüche, wobei die erste gerade Seitenfläche (34a) einen Ruhepositionsabschnitt bildet und die zweite gerade Seitenfläche (34b) einen Lastabschnitt bildet.

11. Aufhängungsvorrichtung (10) für landwirtschaftliche Arbeitsgeräte nach Anspruch 10, wobei ein Volumen zwischen dem Ruhepositionsabschnitt und einem zusammenwirkenden Abschnitt des Außengehäuses ein erstes Volumen definiert, das eines der Aufhängungselemente in einer Ruheposition aufnimmt, und ein Volumen zwischen dem Lastabschnitt und einem zusammenwirkenden Abschnitt des Außengehäuses ein zweites kleineres Volumen definiert, das eines der Aufhängungselemente in einer Lastposition aufnimmt.

12. Aufhängungsvorrichtung (10) für landwirtschaftliche Arbeitsgeräte nach einem der vorhergehenden Ansprüche, wobei die Innenseite des Außengehäuses Ausnehmungen zum Aufnehmen der Aufhängungselemente in einer Lastposition aufweist, um die Aufhängungskraft zu verringern.

13. Aufhängungsvorrichtung (10) für landwirtschaftliche Arbeitsgeräte nach einem der vorhergehenden Ansprüche, wobei die Aufhängungselemente mindestens einen Steg (44) und/oder mindestens eine Ausnehmung (46) aufweisen, und wobei die Innenseite des Gehäuses mindestens eine zusammenwirkende Ausnehmung (24) und/oder mindestens einen zusammenwirkenden Steg (26) aufweist.

14. Landwirtschaftliches Arbeitsgerät (1), umfassend eine Aufhängungsvorrichtung nach einem der vorhergehenden Ansprüche.

15. Verfahren zum Aufhängen eines landwirtschaftlichen Arbeitsgeräts unter Verwendung einer Aufhängungsvorrichtung, umfassend:
ein Gehäuse (22, 23),
einen sich durch das Gehäuse erstreckenden Träger (30), und
eine Mehrzahl von Aufhängungselementen (40a, 40b, 40c), die in einem Raum zwischen dem Gehäuse und dem Träger angeordnet sind,
wobei der Träger (30) einen Querschnitt aufweist, der bei Betrachtung in einer Ebene senkrecht zur Längsrichtung (L) ein Polygon mit einer Mehrzahl von Ecken (32a, 32b, 32c) bildet,
wobei jede Seite zwischen zwei benachbarten Ecken des Polygons eine erste gerade Seitenfläche (34a) und eine zweite gerade Seitenfläche (34b) aufweist, die mit der ersten geraden Seitenfläche einen Winkel (A1) bildet, der größer als 0° ist,
wobei das Polygon ein Dreieck ist, sodass der Träger (30) drei erste Seitenflächen und drei zweite Seitenflächen aufweist, und
wobei der Winkel (A1) zwischen der ersten geraden Seitenfläche (34a) und der zweiten geraden Seitenfläche (34b) während der Drehung des Trägers relativ zum Gehäuse eine Volumenzunahme zwischen der zweiten geraden Seitenfläche (34b) und dem Gehäuse (20) erzeugt, wobei das Verfahren umfasst:
- Komprimieren (S1) eines der Aufhängungselemente zwischen einer der ersten geraden Seitenflächen (34a) und einer Innenfläche des Gehäuses in einer Ruheposition,
- Bewegen (S2) der Aufhängungselemente von der ersten geraden Seitenfläche zu einer zweiten geraden Seitenfläche über eine gekrümmte Verbindungsfläche durch Drehen des Gehäuses relativ zu dem Träger um eine Drehachse (A) entlang der Längsrichtung (L) des Trägers von einer Ruheposition in eine Lastposition, und
- Komprimieren (S3) des Aufhängungselements zwischen der zweiten geraden Seitenfläche und einer Innenfläche des Gehäuses in der Lastposition.

16. Verfahren nach Anspruch 15, ferner umfassend:
- Aufnehmen (S3b) eines der Aufhängungselemente (40a, 40b, 40c) in einer Ausnehmung in der Innenseite des Außengehäuses, um die Aufhängungskraft in der Lastposition zu verringern.

## Revendications

1. Dispositif de suspension (10) pour une partie d'interaction avec le sol d'un outil agricole (1) comprenant :
un carter (20),
une poutre (30) s'étendant à travers le carter, et
une pluralité d'éléments de suspension (40a, 40b, 40c) disposés dans un espace entre le carter et la poutre,
le carter et la poutre étant propres à pivoter élastiquement l'un par rapport à l'autre autour d'un axe de rotation (A) le long de la direction longitudinale (L) de ladite poutre,
ladite poutre (30) présentant une section transversale dans un plan perpendiculaire à la direction longitudinale (L) en forme de polygone comportant une pluralité de coins (32a, 32b, 32c),
chaque côté entre deux coins adjacents dudit polygone présentant une première surface latérale droite (34a) et une seconde surface latérale droite (34b) formant un angle (A1) avec la première surface latérale droite qui est supérieur à 0°,
ledit polygone étant un triangle, et la poutre (30) comportant ainsi trois premières surfaces latérales et trois secondes surfaces latérales,
le carter comportant un intérieur qui, dans une coupe transversale dans un plan perpendiculaire à la direction longitudinale (L), a un côté intérieur droit sensiblement parallèle à l'une desdites secondes surfaces latérales droites lorsqu'une rotation est appliquée au carter et à la poutre l'un par rapport à l'autre jusqu'à une position de charge,
**caractérisé en ce que**
l'un desdits éléments de suspension est conçu pour être comprimé entre ledit côté intérieur droit du carter et la seconde surface latérale droite sensiblement parallèle de la poutre lorsqu'une rotation est appliquée au carter et à la poutre l'un par rapport à l'autre jusqu'à une position de charge, et
ledit angle (A1) entre la première surface latérale droite (34a) et la seconde surface latérale droite (34b) créant une augmentation de volume entre ladite seconde surface latérale droite (34b) et le carter (20) lors de la rotation de la poutre par rapport au carter.

2. Dispositif de suspension (10) pour des outils agricoles selon l'une quelconque des revendications précédentes, dans lequel chacun de ladite pluralité de coins dudit triangle est arrondi avec une partie extérieure convexe radialement vers l'extérieur.

3. Dispositif de suspension (10) pour des outils agricoles selon l'une quelconque des revendications précédentes, dans lequel l'angle (A1) entre la première surface latérale droite et la seconde surface latérale droite est compris entre 15° et 32°, de préférence entre 18° et 29°.

4. Dispositif de suspension (10) pour des outils agricoles selon l'une quelconque des revendications précédentes, dans lequel la première surface latérale droite et la seconde surface latérale droite forment ensemble au moins un tiers de la longueur totale du côté, et de préférence forment ensemble au moins la moitié de la longueur du côté.

5. Dispositif de suspension (10) pour des outils agricoles selon l'une quelconque des revendications précédentes, dans lequel ledit triangle a trois coins avec un angle intérieur qui est compris entre 40° et 65°, de préférence entre 45° et 60°.

6. Dispositif de suspension (10) pour des outils agricoles selon l'une quelconque des revendications précédentes, dans lequel chaque côté entre les coins dudit triangle présente une partie courbe de liaison (36) entre la première surface droite et la seconde surface droite.

7. Dispositif de suspension (10) pour des outils agricoles selon l'une quelconque des revendications précédentes, dans lequel la première surface latérale droite a un prolongement le long d'un axe s'étendant vers l'intérieur dans la section transversale dans une direction vers un premier coin.

8. Dispositif de suspension (10) pour des outils agricoles selon la revendication 7, dans lequel la seconde surface latérale droite a un prolongement le long d'un axe s'étendant vers un second coin dans le triangle situé dans l'autre extrémité de la surface latérale par rapport audit premier coin.

9. Dispositif de suspension (10) pour des outils agricoles selon l'une quelconque des revendications précédentes, dans lequel la première surface latérale droite est reliée à un coin convexe radialement vers l'extérieur adjacent par l'intermédiaire d'une partie concave radialement vers l'extérieur.

10. Dispositif de suspension (10) pour des outils agricoles selon l'une quelconque des revendications précédentes, dans lequel la première surface latérale droite (34a) forme une partie de position de repos et la seconde surface latérale droite (34b) forme une partie de charge.

11. Dispositif de suspension (10) pour des outils agricoles selon la revendication 10, dans lequel un volume entre ladite partie de position de repos et une partie coopérante du carter extérieur définit un premier volume qui contient l'un desdits éléments de suspension dans une position de repos, et un volume entre ladite partie de charge et une partie coopérante du carter extérieur définit un second volume plus petit qui contient l'un desdits éléments de suspension dans une position de charge.

12. Dispositif de suspension (10) pour des outils agricoles selon l'une quelconque des revendications précédentes, dans lequel l'intérieur du carter extérieur présente des renfoncements destinés à recevoir les éléments de suspension dans une position de charge afin de réduire la force de suspension.

13. Dispositif de suspension (10) pour des outils agricoles selon l'une quelconque des revendications précédentes, dans lequel les éléments de suspension ont au moins une nervure (44) et/ou au moins un renfoncement (46), et dans lequel l'intérieur du carter a au moins un renfoncement coopérant (24) et/ou au moins une nervure coopérante (26).

14. Outil agricole (1) comprenant un dispositif de suspension selon l'une quelconque des revendications précédentes.

15. Procédé de suspension d'un outil agricole au moyen d'un dispositif de suspension comprenant :
un carter (22, 23),
une poutre (30) s'étendant à travers le carter, et
une pluralité d'éléments de suspension (40a, 40b, 40c) disposés dans un espace entre le carter et la poutre,
ladite poutre (30) présentant une section transversale dans un plan perpendiculaire à la direction longitudinale (L) en forme de polygone comportant une pluralité de coins (32a, 32b, 32c),
chaque côté entre deux coins adjacents dudit polygone présentant une première surface latérale droite (34a) et une seconde surface latérale droite (34b) formant un angle (A1) avec la première surface latérale droite qui est supérieur à 0°,
ledit polygone étant un triangle, et la poutre (30) comportant ainsi trois premières surfaces latérales et trois secondes surfaces latérales, et
ledit angle (A1) entre la première surface latérale droite (34a) et la seconde surface latérale droite (34b) créant une augmentation de volume entre ladite seconde surface latérale droite (34b) et le carter (20) lors de la rotation de la poutre par rapport au carter, le procédé comprenant :
- comprimer (S1) un desdits éléments de suspension entre une desdites premières surfaces latérales droites (34a) et une surface intérieure dudit carter dans une position de repos,
- déplacer (S2) les éléments de suspension de la première surface latérale droite à une seconde surface latérale droite par l'intermédiaire d'une surface de liaison courbe en appliquant une rotation au carter par rapport à la poutre autour d'un axe de rotation (A) le long de la direction longitudinale (L) de ladite poutre d'une position de repos jusqu'à une position de charge, et
- comprimer (S3) ledit élément de suspension entre ladite seconde surface latérale droite et une surface intérieure dudit carter dans ladite position de charge.

16. Procédé selon la revendication 15, comprenant en outre :
- recevoir (S3b) un desdits éléments de suspension (40a, 40b, 40c) dans un renfoncement dans l'intérieur dudit carter extérieur pour réduire la force de suspension dans ladite position de charge.
